# FASCICULE DE BREVET EUROPEEN

(11) **EP 4 163 674 B1**
(45) Date de publication et mention de la délivrance du brevet: **02.07.2025**
(21) Numéro de dépôt: 22199354.6
(22) Date de dépôt: 03.10.2022
(51) Int. Cl.: G01S 17/89, G01S 7/481, G01S 7/4912, G01S 17/34

(54) **SYSTÈME IMAGEUR LIDAR À DÉTECTION HÉTÉRODYNE DE TYPE FMCW À ENCOMBREMENT RÉDUIT**
FMCW-HETERODYN-LIDAR-BILDGEBUNGSSYSTEM MIT REDUZIERTEM PLATZBEDARF
COMPACT FMCW HETERODYNE DETECTION LIDAR IMAGING SYSTEM

(30) Priorité: 05.10.2021 FR 2110497
(43) Date de publication de la demande: 12.04.2023
(73) Titulaire: Commissariat à l'Energie Atomique et aux Energies Alternatives, 75015 Paris (FR)
(72) Inventeur: FREY, Laurent, 38054 GRENOBLE Cedex 09 (FR); DAAMI, Anis, 38054 GRENOBLE Cedex 09 (FR)
(74) Mandataire: Brevalex

(56) Documents cités:
- US-A1- 2020 011 994
- SANDBORN PHILLIP: "FMCW Lidar: Scaling to the Chip-Level and Improving Phase-Noise-Limited Performance", 1 December 2019 (2019-12-01), pages 1 - i90, XP055852075, Retrieved from the Internet <URL:https://www2.eecs.berkeley.edu/Pubs/TechRpts/2019/EECS-2019-148.pdf>

## Description

### DOMAINE TECHNIQUE

Le domaine de l'invention est celui des systèmes imageurs LIDAR à détection hétérodyne à onde continue modulée en fréquence (FMCW, pour *Frequency Modulated Continuous Wave,* en anglais).

### ÉTAT DE LA TECHNIQUE ANTÉRIEURE

Les systèmes imageurs LIDAR à détection hétérodyne de type FMCW permettent de déterminer une distance d'une scène éclairée par un signal optique cohérent. Un tel système imageur repose sur le principe de la détection hétérodyne, dans le sens où on exploite des propriétés d'un signal hétérodyne formé par l'interférence entre deux signaux optiques cohérents entre eux et présentant une différence de chemin optique, à savoir habituellement un signal de référence et un signal rétrodiffusé par la scène. Ces deux signaux optiques sont cohérents entre eux dans la mesure où ils proviennent d'un même signal optique, dit primaire, émis par une source optique. La publication scientifique de Sandborn intitulée FMCW Lidar: Scaling to the Chip-Level and Improving Phase-Noise-Limited Performance, EECS Department, University of California, Berkeley, Technical Report No. UCB/EECS-2019-148; December 1, 2019, ainsi que le document US 2020/011994 A1 décrivent différents exemples de systèmes imageurs LIDAR de type FMCW.

A ce titre, le document WO2021/144357A1 décrit un exemple d'un tel système imageur, appelé ici de type flash dans la mesure où il est adapté à éclairer une pluralité de points de la scène de manière simultanée et à en déterminer une cartographie de distance (image de distance).

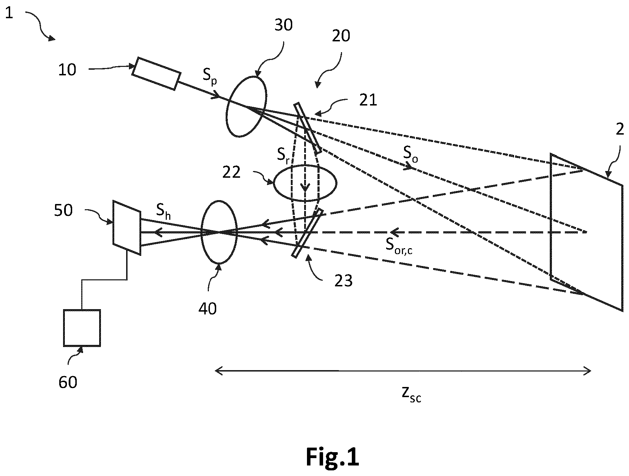

La figure 1 est une vue schématique et partielle d'un tel système imageur 1. Il comporte *a minima* :
∘ une source optique 10 du signal dit primaire Sₚ, cohérent, continu et modulé en fréquence ;
∘ un dispositif optique 20 de séparation et recombinaison, comportant un élément optique séparateur 21 adapté à diviser le signal primaire Sₚ en un signal objet Sₒ dirigé vers la scène 2 et en un signal de référence Sᵣ dirigé vers un photodétecteur 50 ; un élément optique 22 de mise en forme du signal de référence Sᵣ ; et un élément optique recombineur 23 adapté à diriger vers le photodétecteur 50 suivant un même axe optique le signal de référence Sᵣ ainsi qu'une partie S_{or,c} du signal objet rétrodiffusé Sₒᵣ ;
∘ un dispositif optique 30 de projection, adapté à projeter le signal objet Sₒ pour éclairer toute la scène 2 de manière simultanée ;
∘ un dispositif optique 40 d'imagerie, adapté à transmettre la partie collectée S_{or,c} du signal objet rétrodiffusé Sₒᵣ et à former l'image de la scène éclairée 2 dans le plan de détection du photodétecteur 50. Il comporte un élément optique de collection qui collecte les faisceaux lumineux définissant la partie S_{or,c} du signal objet rétrodiffusé Sₒᵣ ;
∘ le photodétecteur 50, ici un photodétecteur matriciel, adapté à recevoir la partie collectée S_{or,c} du signal objet rétrodiffusé Sₒᵣ et le signal de référence Sᵣ, lesquels interfèrent pour former un signal hétérodyne Sₕ présentant une fréquence de battement f_{b} ;
∘ une unité de traitement 60, adaptée à déterminer une distance z_{sc} (et ici une cartographie de distance) de la scène 2 à partir de la fréquence de battement f_{b} du signal hétérodyne Sₕ.

Le signal primaire Sₚ présente une variation de fréquence instantanée, avec par exemple une fréquence de départ f₀ et une variation de valeur B (appelée *chirp,* en anglais) sur une période T. Le signal primaire Sₚ dit *chirpé* est une onde sinusoïdale dont la fréquence instantanée évolue ici linéairement au cours du temps. Il est divisé pour former le signal de référence Sᵣ et le signal objet Sₒ, où le premier ne passe pas par la scène 2 et dont le trajet optique est fixe et indépendant de la distance z_{sc} à déterminer. On l'appelle habituellement signal de référence Sᵣ d'un oscillateur local.

Le photodétecteur 50 reçoit ainsi le signal de référence Sᵣ ainsi que le signal objet rétrodiffusé et collecté S_{or,c}, lequel est une réplique atténuée et retardée du signal objet Sₒ avec un retard τ. Le retard se traduit par une différence de fréquence f_{b} entre les deux signaux dans l'intervalle [τ ; T], avec T>>τ, et τ = 2z_{sc}/c environ lorsqu'on néglige le trajet du signal de référence Sᵣ, où c est la vitesse de la lumière dans le vide. Cette fréquence f_{b}, dite fréquence de battement, est égale à la différence entre la fréquence du signal de référence Sᵣ et le signal objet rétrodiffusé et collecté S_{or,c}. Sa valeur peut être déterminée dans le domaine temporel par comptage du nombre d'oscillations du signal hétérodyne Sₕ sur la période T, ou dans le domaine fréquentiel par transformée de Fourier rapide.

On peut alors déterminer, à partir de la valeur de cette fréquence de battement f_{b}, la distance z_{sc} entre la scène éclairée 2 et le photodétecteur matriciel 50. En effet, sachant que f_{b}/B = τ/T, et que τ = 2z_{sc}/c, la distance z_{sc} de la scène 2 s'exprime par la relation : z_{sc} ≈ f_{b}cT/2B.

Notons que le système imageur peut présenter une architecture de type Mach-Zehnder où les éléments optiques séparateur 21 et recombineur 23 sont physiquement distincts, ou une architecture de type Michelson où un seul élément optique assure les fonctions de séparation et de recombinaison. Comme le décrit le document WO2021/144357A1, le dispositif optique de séparation et de recombinaison peut présenter une configuration en espace libre et comporter notamment des lames semi-réfléchissantes et/ou des cubes séparateurs, ou peut présenter une configuration en optique guidée et comporter notamment des guides d'onde et des réseaux de diffraction. Quoi qu'il en soit, il existe un besoin de réduire l'encombrement de tels systèmes imageurs.

### EXPOSÉ DE L'INVENTION

L'invention a pour objectif de remédier au moins en partie aux inconvénients de l'art antérieur, et plus particulièrement de proposer un système imageur LIDAR à détection hétérodyne de type FMCW dont l'encombrement est réduit, et en particulier qui ne comporte pas de dispositif optique de séparation/recombinaison.

Pour cela, l'objet de l'invention est un système imageur LIDAR de type FMCW, adapté à déterminer une distance z_{sc} le séparant d'une scène, comportant : une source optique adaptée à émettre un signal primaire Sₚ cohérent, continu et modulé en fréquence, pour éclairer la scène ; un élément optique de collection adapté à collecter une partie appelée signal collecté S_{ret,c} d'un signal rétrodiffusé Sᵣₑₜ par la scène issu du signal primaire Sₚ ; un photodétecteur destiné à recevoir un signal hétérodyne Sₕ associé au signal collecté S_{ret,c}; une unité de traitement adaptée à déterminer la distance z_{sc} de la scène à partir d'une fréquence de battement du signal hétérodyne Sₕ.

Selon l'invention, il est adapté à diriger entièrement le signal primaire Sₚ jusqu'à la scène. Il ne comporte donc pas un élément optique de séparation adapté à diviser le signal primaire Sₚ en un signal de référence Sᵣ dirigé vers le photodétecteur sans passer par la scène, et en un signal objet Sₒ dirigé vers la scène. Cela se traduit par le fait que le signal primaire incident sur la scène présente une puissance optique égale à celle qu'il présente en sortie de la source optique. De plus, il comporte un réflecteur adapté à réfléchir en direction de la scène une partie S_{pr,nc}, appelée signal non collecté S_{ret,nc}, du signal rétrodiffusé Sᵣₑₜ et non collectée par l'élément optique de collection. Aussi, la partie collectée S_{pr,c} du signal rétrodiffusé Sₚᵣ étant alors formée de premiers faisceaux lumineux S_{ret,c(1)} n'ayant pas été réfléchis par le réflecteur et de deuxièmes faisceaux lumineux S_{ret,c(2)} ayant été réfléchis par le réflecteur puis par la scène, et le signal hétérodyne Sₕ étant alors formé par l'interférence entre les premiers faisceaux lumineux S_{ret,c(1)} et les deuxièmes faisceaux lumineux S_{ret,c(2)}.

Notons ici que les deuxièmes faisceaux lumineux S_{ret,c(2)}, ayant été réfléchis par le réflecteur, appartiennent à la partie collectée S_{ret,c} du signal rétrodiffusé Sᵣₑₜ, et que ce signal rétrodiffusé Sᵣₑₜ est un signal rétrodiffusé par la scène. On comprend alors que les deuxièmes faisceaux lumineux S_{ret,c(2)} ont été réfléchis par la scène avant d'être collectés.

Certains aspects préférés mais non limitatifs de ce système imageur sont les suivants.

Le réflecteur peut être rétroréfléchissant, pour réfléchir en direction de la scène des faisceaux lumineux incidents suivant un axe de réflexion identique à leur axe d'incidence.

Le réflecteur peut présenter une bordure latérale située à une distance maximale rₘₐₓ d'un axe optique de l'élément optique de collection, et être dimensionné de sorte que la distance maximale rₘₐₓ est inférieure à √(cz_{sc}/B) lorsque le réflecteur est rétroréfléchissant, où c est la vitesse de la lumière dans le vide, et B est une variation de la fréquence du signal primaire Sₚ sur une période T de la modulation, et de sorte que la distance maximale rₘₐₓ est inférieure à √(cz_{sc}/3B) lorsque le réflecteur est non rétroréfléchissant.

Le réflecteur peut être situé dans le plan de l'élément optique de collection.

Le réflecteur peut être situé en aval de l'élément optique de collection au niveau du photodétecteur.

D'une manière générale, le réflecteur peut être formé d'une surface continûment réfléchissante ou rétroréfléchissante, ou peut être formé de surfaces réfléchissantes ou rétroréfléchissantes non jointives et séparées les unes des autres par une surface transparente ou réfléchissante à la longueur d'onde des signaux optiques d'intérêt.

Le réflecteur peut être situé en amont de l'élément optique de collection avec un axe optique de collection qui le traverse, le réflecteur étant alors formé de surfaces réfléchissantes ou rétroréfléchissantes séparées les unes des autres et entourées par une surface transparente à la longueur d'onde du signal primaire Sₚ.

Le réflecteur peut comporter une surface centrale traversée par l'axe optique de collection, dans laquelle il est formé de surfaces réfléchissantes ou rétroréfléchissantes séparées les unes des autres et entourées par une surface transparente, et une surface périphérique qui entoure la surface centrale, dans laquelle les surfaces réfléchissantes ou rétroréfléchissantes sont accolées les unes aux autres.

Le système imageur peut être adapté à n'éclairer qu'un point de la scène. En variante, il peut être adapté à éclairer simultanément une pluralité de points de la scène et comporter alors un dispositif optique de projection du signal primaire Sₚ sur la scène pour éclairer simultanément la pluralité de points de la scène et un dispositif optique d'imagerie adapté à former une image de la scène éclairée dans le plan du photodétecteur.

Le système imageur peut présenter une configuration dite mono-statique où un axe optique d'illumination de la scène par le signal primaire Sₚ est identique à un axe optique de collection de l'élément optique de collection, et comporter une lame semi-réfléchissante ou un cube séparateur transmettant le signal primaire Sₚ vers la scène et réfléchissant le signal rétrodiffusé Sᵣₑₜ vers le photodétecteur.

Le système imageur peut présenter une configuration dite bi-statique où un axe optique d'illumination de la scène par le signal primaire Sₚ est différent d'un axe optique de collection de l'élément optique de collection.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue schématique et partielle d'un système imageur de type flash selon un exemple de l'art antérieur ;

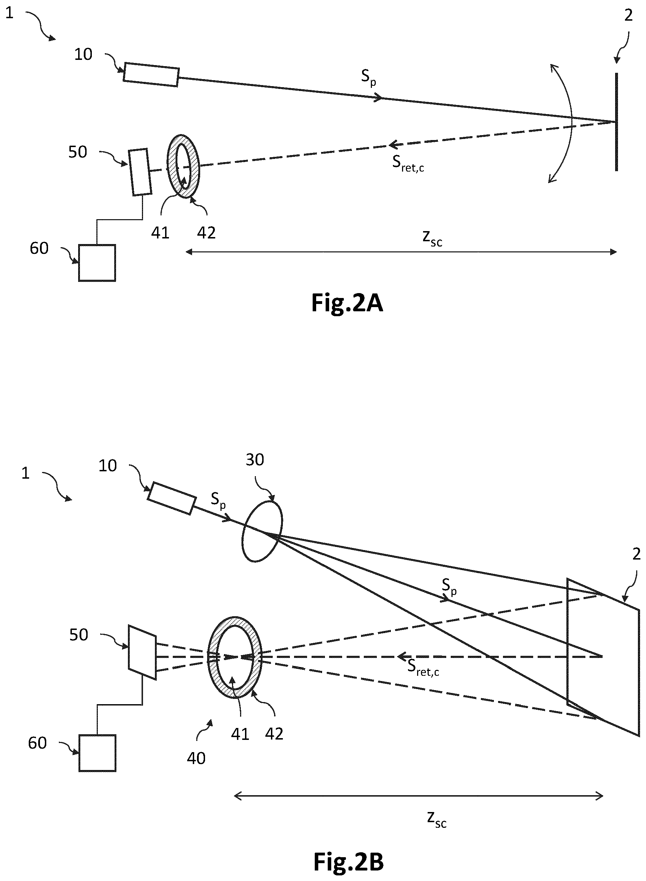

les figures 2A et 2B sont des vues schématiques et partielles de systèmes imageurs selon des modes de réalisation, l'un étant de type mono-point (fig.2A) et l'autre de type flash (fig.2B) ;

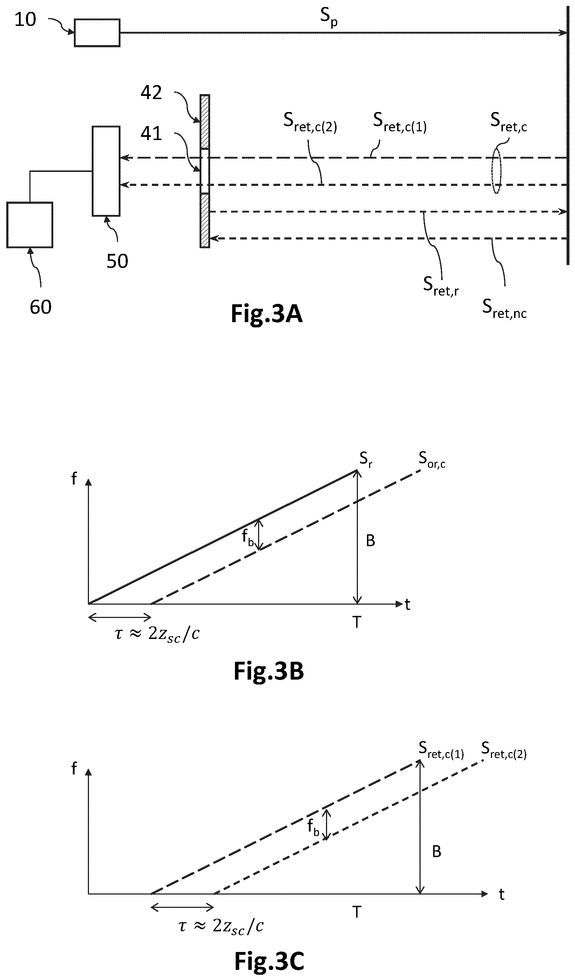

la figure 3A est une vue schématique et partielle d'un système imageur selon un mode de réalisation similaire à celui de la fig.2A, où les différents signaux optiques sont mis en évidence, en particulier les faisceaux lumineux S_{ret,c(1)} qui forment un premier écho, et les faisceaux lumineux S_{ret,c(2)} qui forment un deuxième écho ;
les figures 3B et 3C illustrent une évolution de la fréquence optique de différents signaux mettant ainsi en évidence la fréquence de battement f_{b} du signal hétérodyne Sₕ, dans le cas d'un système imageur selon un exemple de l'art antérieur (fig.3B) et dans le cas d'un système imageur selon un mode de réalisation de l'invention (fig.3C) ;

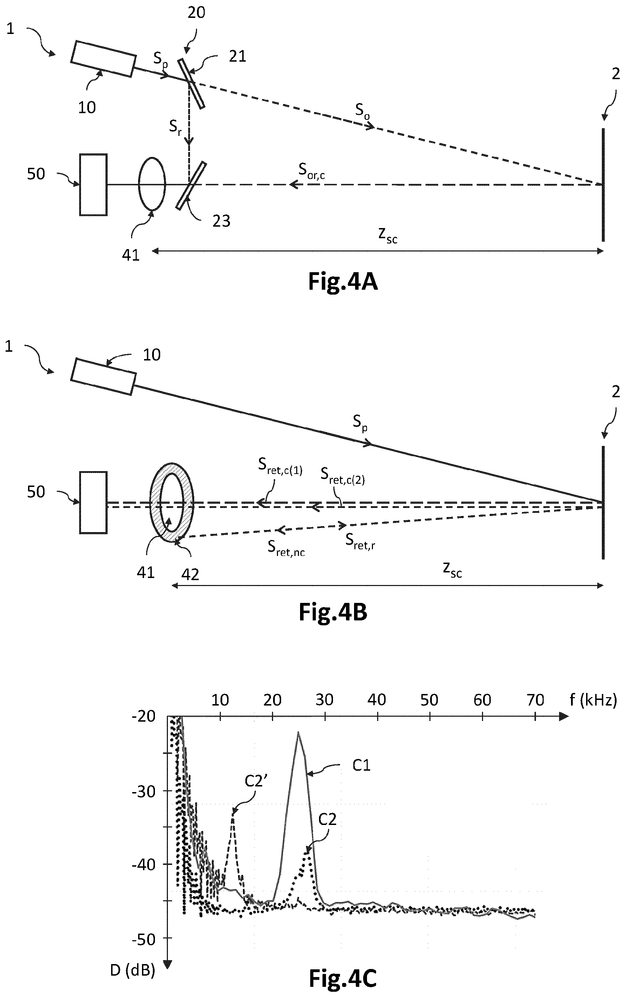

les figures 4A à 4C illustrent un exemple numérique de détermination de la fréquence de battement f_{b} du signal hétérodyne Sₕ, dans le cas d'un système imageur selon un exemple de l'art antérieur (fig.4A), dans le cas d'un système imageur selon un mode de réalisation (fig.4B), où la fig.4C représente la densité spectrale de puissance mettant en évidence la fréquence de battement f_{b} dans ces deux cas ;

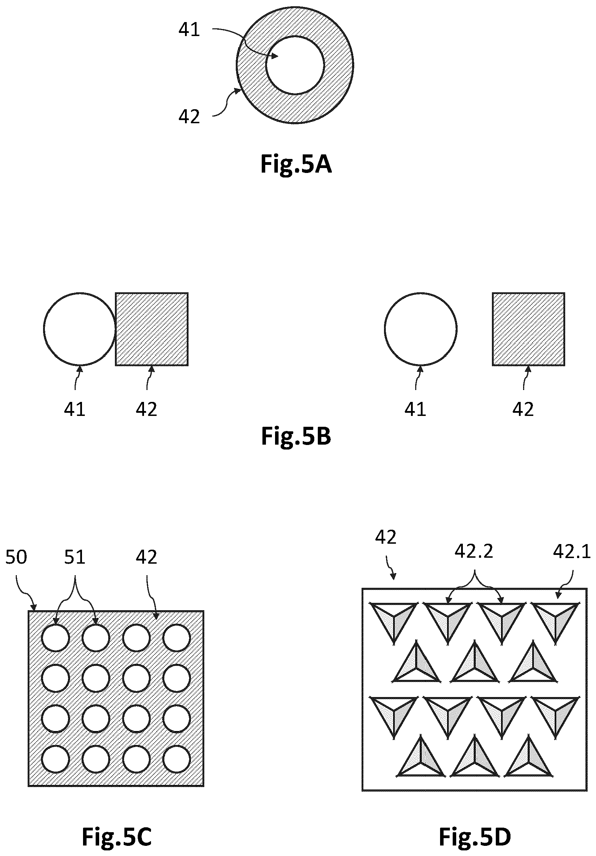

les figures 5A à 5D sont des vues schématiques d'exemples du réflecteur d'un système imageur selon un mode de réalisation, où le réflecteur est un anneau entourant l'élément optique de collection (fig.5A) ; est un carré accolé ou distant de l'élément optique de collection (fig.5B) ; est situé au niveau du photodétecteur (fig.5C) ; est formé de surfaces rétroréfléchissantes séparées les unes des autres par une surface transparente (fig.5D) ;

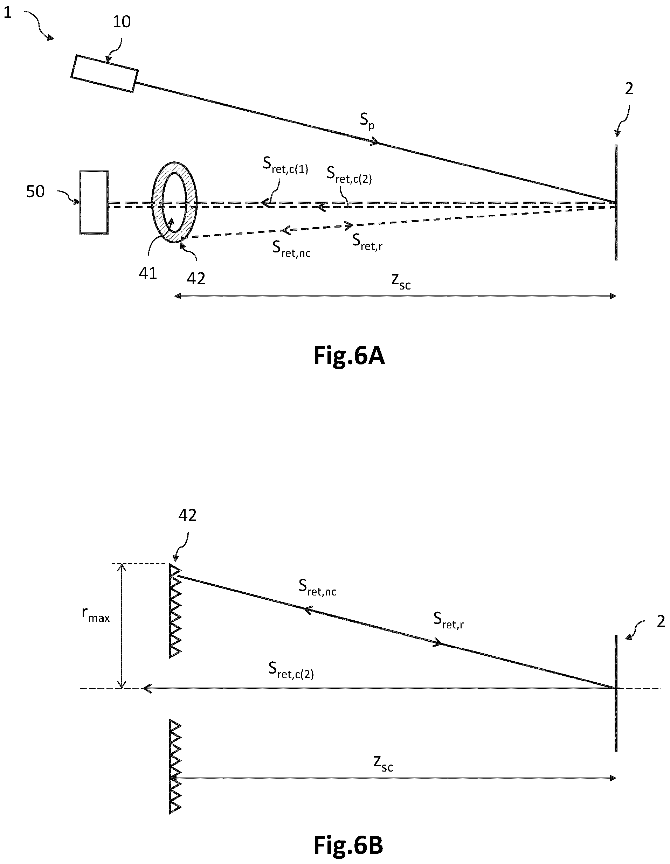

la figure 6A est une vue schématique et partielle d'un système imageur selon un mode de réalisation, de type mono-point et où le réflecteur est rétroréfléchissant ; et la fig.6B est une vue détaillée de la fig.6A mettant en évidence le signal rétrodiffusé et non collecté S_{ret,nc}, le signal réfléchi S_{ret,r}, et le deuxième écho S_{ret,c(2)} ;

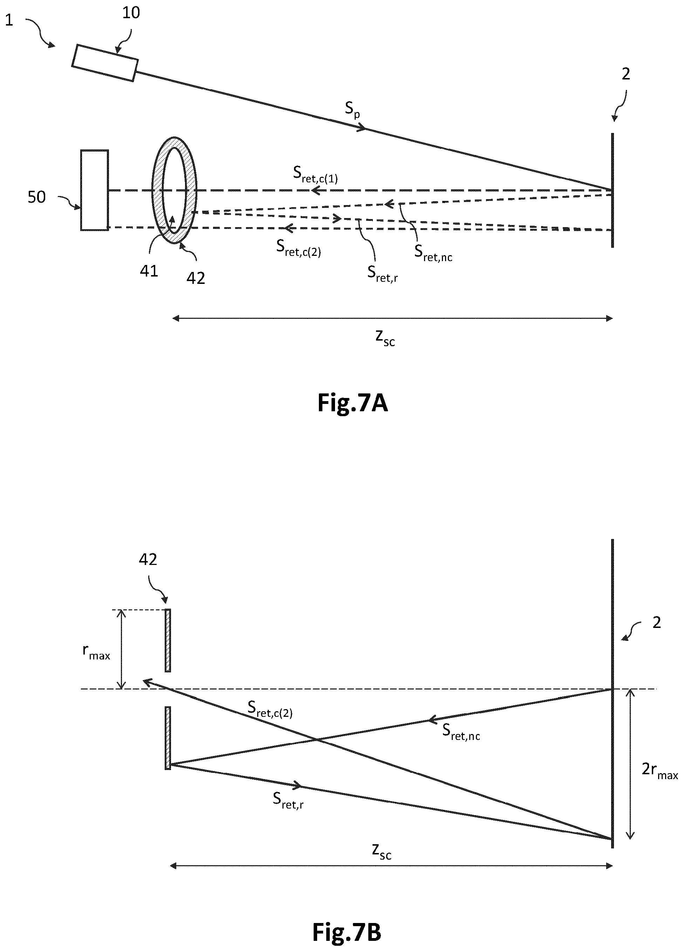

la figure 7A est une vue schématique et partielle d'un système imageur selon un mode de réalisation, de type mono-point et où le réflecteur est non rétroréfléchissant ; et la fig.7B est une vue détaillée de la fig.7A mettant en évidence le signal rétrodiffusé et non collecté S_{ret,nc}, le signal réfléchi S_{ret,r}, et le deuxième écho S_{ret,c(2)} ;

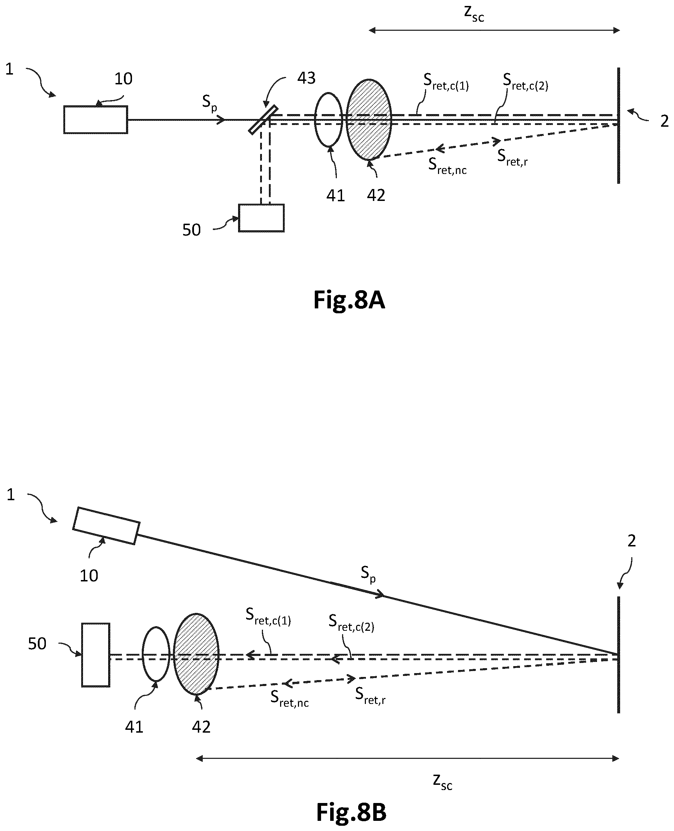

les figures 8A et 8B sont des vues schématiques et partielles d'un système imageur selon des modes de réalisation, où le réflecteur est situé en amont de l'élément optique de collection et est traversé par l'axe optique de ce dernier, en configuration mono-statique (fig.8A) et en configuration bi-statique (fig.8B).

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un système imageur LIDAR à détection hétérodyne de type à signal continu modulé en fréquence (FMCW, pour *Frequency-Modulated Continuous-Wave,* en anglais), permettant de déterminer une distance z_{sc} d'une scène, voire une cartographie de distance z_{sc(i,j)} (image de distance), présentant un encombrement réduit dans la mesure où il ne comporte pas de dispositif optique de séparation/recombinaison tel que celui de l'art antérieur.

Comme décrit en détail plus loin, le système imageur est alors adapté à diriger entièrement le signal primaire Sₚ jusqu'à la scène pour l'éclairer. De plus, il comporte un réflecteur permettant de collecter, outre des faisceaux lumineux S_{ret,c(1)} n'ayant pas été réfléchis par le réflecteur et que l'on appelle premier écho, des deuxièmes faisceaux lumineux S_{ret,c(2)} ayant été réfléchis par le réflecteur et que l'on appelle deuxième écho. La distance z_{sc} de la scène est alors déterminée à partir d'une fréquence de battement f_{b} du signal hétérodyne Sₕ, celui-ci étant formé par l'interférence du premier écho S_{ret,c(1)} et du deuxième écho S_{ret,c(2)}, et non plus par interférence entre le signal de référence Sᵣ d'un oscillateur local et du signal objet rétrodiffusé Sₒᵣ.

Le système imageur est dit « LIDAR » (acronyme de *Light Detection and Ranging,* en anglais) dans la mesure où un signal optique cohérent est utilisé pour déterminer une distance z_{sc} d'un point de la scène ou une cartographie de distance z_{sc(i,j)} de la scène. Dans le cadre de l'invention, le système imageur peut être soit de type mono-point dans le sens où le signal optique n'éclaire qu'un point de la scène, avec éventuellement un balayage spatial de la scène par le signal optique, soit de type flash dans le sens où le signal optique éclaire simultanément plusieurs points de la scène et où le système imageur acquiert l'image de la scène pour en déterminer une cartographie de distance. Dans le cadre de l'invention, le signal optique qui éclaire la scène est le signal primaire Sₚ, et non plus le signal objet Sₒ comme dans l'art antérieur.

De plus, le système imageur est dit à détection hétérodyne dans la mesure où, pour déterminer la distance de la scène éclairée, on détermine une fréquence dite de battement d'un signal hétérodyne formé par l'interférence entre deux signaux cohérents entre eux et présentant une différence de chemin optique. A la différence de l'art antérieur où les deux signaux optiques sont le signal de référence Sᵣ (issu de la division du signal primaire Sₚ pour former le signal de référence Sᵣ et le signal objet Sₒ) et le signal objet rétrodiffusé Sₒᵣ, dans le cadre de l'invention les deux signaux optiques sont tous les deux des signaux rétrodiffusés par la scène, à savoir le premier écho S_{ret,c(1)} n'ayant pas été réfléchi par le réflecteur, et le deuxième écho S_{ret,c(2)} ayant été réfléchi par le réflecteur. Ces deux signaux optiques S_{ret,c(1)} et S_{ret,c(2)} restent cohérents entre eux puisqu'ils sont issus du même signal primaire Sₚ émis par la source optique. Enfin, la détection hétérodyne est de type FMCW dans la mesure où le signal primaire Sₚ est un signal continu et modulé en fréquence.

Les figures 2A et 2B sont des vues schématiques et partielles d'un système imageur LIDAR à détection hétérodyne de type FMCW, selon des modes de réalisation, où l'une correspond à un système imageur de type mono-point, et l'autre à un système imageur de type flash. Les figures sont très schématiques : la scène est ici une surface plane mais dans les faits elle peut évidemment ne pas l'être.

D'une manière générale, le système imageur 1 comporte *a minima :*
∘ une source optique 10, adaptée à émettre un signal primaire Sₚ, cohérent, continu et modulé en fréquence, pour éclairer la scène 2 ;
∘ un élément optique de collection 41, adapté à collecter une partie appelée signal collecté S_{ret,c} d'un signal rétrodiffusé Sᵣₑₜ par la scène 2 issu du signal primaire Sₚ ;
∘ un photodétecteur 50, destiné à recevoir un signal hétérodyne Sₕ associé au signal collecté S_{ret,c} ;
∘ une unité de traitement 60, adaptée à déterminer une distance z_{sc} de la scène 2 à partir d'une fréquence de battement du signal hétérodyne Sₕ.

Pour réduire l'encombrement du système imageur 1 et ainsi pouvoir se passer du dispositif optique de séparation/recombinaison, le système imageur 1 selon l'invention est adapté à diriger entièrement le signal primaire Sₚ jusqu'à la scène 2. De plus, il comporte un réflecteur 42 adapté à réfléchir en direction de la scène 2 une partie non collectée S_{ret,nc} du signal rétrodiffusé Sᵣₑₜ. Aussi, la signal collecté S_{ret,c} par l'élément optique de collection 41 est formé de premiers faisceaux lumineux S_{ret,c(1)} n'ayant pas été réfléchis par le réflecteur 42 (premier écho), et de deuxièmes faisceaux lumineux S_{ret,c(2)} ayant été réfléchis par le réflecteur 42 (deuxième écho).

Il en résulte que le photodétecteur 50 reçoit deux signaux optiques S_{ret,c(1)} et S_{ret,c(2)}, cohérents entre eux car issus tous les deux du même signal primaire Sₚ, rétrodiffusés par la scène 2 mais qui présentent une différence de chemin optique entre eux. Ils interfèrent l'un avec l'autre et forment le signal hétérodyne Sₕ qui présente une fréquence de battement f_{b}.

L'unité de traitement du système imageur 1 est alors en mesure de déterminer la distance z_{sc} de la scène 2 à partir de la fréquence de battement f_{b} de ce signal hétérodyne Sₕ, sans avoir à utiliser le signal de référence Sᵣ de l'oscillateur local comme dans l'art antérieur. En conséquence, il n'est pas nécessaire de disposer d'un dispositif optique de séparation/recombinaison, de sorte que le système imageur 1 selon l'invention présente un encombrement réduit.

Notons que le fait de diriger entièrement le signal primaire Sₚ jusqu'à la scène 2 se traduit par le fait que la puissance optique du signal primaire Sₚ incident sur la scène (au niveau de la surface éclairée de la scène 2) est égale à la puissance optique du signal primaire Sₚ en sortie de la source optique 10, moyennant évidemment les faibles pertes optiques éventuelles lors de la transmission du signal primaire Sₚ jusqu'à la scène 2. On considère ici la puissance du signal primaire Sₚ en sortie de la source optique 10, qui peut être légèrement inférieure à celle en sortie de la source laser, notamment lorsque la source optique 10 comporte des éléments optiques (mise en forme du faisceau lumineux, filtre optique...) qui peuvent induire des pertes optiques, comme décrit plus loin.

La fig.2A illustre un système imageur 1 selon un mode de réalisation de type mono-point. Aussi, le signal primaire Sₚ n'éclaire qu'un point de la scène 2 à chaque instant, et le photodétecteur 50 peut être une simple photodiode (ou une paire de photodiodes balancées). Le système imageur 1 est donc adapté à déterminer la distance z_{sc} du point éclairé de la scène 2. Notons que le système imageur 1 peut être adapté à balayer spatialement la scène 2 par le signal objet Sₒ, point par point. Selon l'invention, il comporte un réflecteur 42, mais ne comporte pas de dispositif de séparation/recombinaison comme celui illustré sur la fig.1.

Le système imageur 1 comporte une source optique 10 d'un signal dit primaire Sₚ, cohérent continu et modulé en fréquence. La source optique 10 comporte une source laser et peut comporter des éléments optiques supplémentaires (non représentés) situés en aval de la source laser.

Le signal primaire Sₚ est modulé en fréquence, par exemple ici de manière linéaire, à partir d'une fréquence de départ f₀ sur une période de répétition T avec une largeur de bande B (*chirp*). Le signal est ici un signal *chirpé,* c'est-à-dire une onde sinusoïdale dont la fréquence instantanée évolue linéairement au cours du temps. A titre d'exemple, le signal primaire Sₚ peut présenter une fréquence optique située dans l'infrarouge.

Dans le cas d'une émission dans le domaine du proche infrarouge (entre 0.7 et 2µm), la source laser peut être une diode laser de type à cavité verticale émettant par la surface (VCSEL, pour *Vertical-Cavity Surface Emitting Laser,* en anglais) qui a généralement une longueur de cohérence de l'ordre du mètre, voire une diode laser du type à émission par la tranche (EEL, pour *Edge Emitting Laser,* en anglais) qui peut avoir une longueur de cohérence de l'ordre de la dizaine voire centaine de mètres.

La source optique 10 présente une longueur de cohérence typiquement supérieure à la différence de chemin optique entre le premier écho S_{ret,c(1)} et le deuxième écho S_{ret,c(2)}. Cette différence de chemin optique correspond, au premier ordre, à deux fois la distance maximale entre le système imageur 1 et la scène 2.

Selon l'invention, à la différence de l'art antérieur, le système imageur 1 ne comporte pas de dispositif optique de séparation/recombinaison identique ou similaire à décrit en référence à la fig.1. Il ne comporte donc pas d'élément optique séparateur adapté à séparer le signal primaire Sₚ en un signal objet Sₒ d'une part et en un signal de référence Sᵣ d'autre part. Il n'y a donc pas de signal de référence Sᵣ d'un oscillateur local (LO, pour *Local Oscillator* en anglais) qui serait dirigé vers le photodétecteur sans passer par la scène 2, pour interférer *in fine* avec le signal rétrodiffusé Sᵣₑₜ. De plus, il ne comporte pas non plus d'élément optique recombineur adapté à diriger vers le photodétecteur 50 suivant un même axe optique, en les superposant spatialement au moins en partie, le signal de référence Sᵣ et la partie collectée S_{ret,c} du signal rétrodiffusé Sᵣₑₜ.

Il en résulte que le signal primaire 10 est le signal qui éclaire la scène 2, sans qu'il ait été, au préalable, divisé en un signal de référence Sᵣ et en un signal objet Sₒ. Aussi, comme indiqué précédemment, la puissance du signal primaire Sₚ en sortie de la source optique 10 est identique à celle du même signal primaire Sₚ qui éclaire la scène 2.

Le système imageur 1 comporte au moins un élément optique de collection 41 d'une partie notée S_{ret,c} du signal rétrodiffusé Sᵣₑₜ par la scène 2, issu du signal primaire Sₚ, ce signal collecté S_{ret,c} étant ensuite reçu par le photodétecteur 50. Il peut être un élément optique en espace libre, et il peut s'agir d'un diaphragme d'ouverture qui définit la pupille physique. Le diaphragme d'ouverture peut être défini par le contour d'une lentille de focalisation, en particulier dans le cas d'un système imageur 1 de type flash. L'élément optique de collection peut, par ailleurs, être formé de plusieurs lentilles entre lesquelles est disposé le diaphragme d'ouverture. L'élément optique de collection 41 peut également être défini par la surface sensible du photodétecteur 50 en particulier dans le cas d'un système imageur 1 de type mono-point, auquel cas il ne s'agit pas d'un objet optique dédié.

Selon l'invention également, le système imageur 1 comporte un réflecteur 42 adapté à réfléchir en direction de la scène 2 une partie notée S_{ret,nc} du signal rétrodiffusé Sᵣₑₜ qui n'a pas été collectée par l'élément optique de collection 41. Le réflecteur 42 est ici un réflecteur spéculaire, dans le sens où il réfléchit les faisceaux lumineux de manière non diffuse ou quasiment non diffuse. Le réflecteur 42 peut être situé au niveau de l'élément optique de collection 41, par exemple en étant coplanaire à celui-ci, ou être situé en amont ou en aval. Comme décrit plus loin, il peut également être situé au niveau du photodétecteur 50.

Comme décrit plus loin, le réflecteur 42 peut être simplement réfléchissant, c'est-à-dire qu'il réfléchit les faisceaux lumineux incidents suivant la loi de réflexion de Snell-Descartes, ou être rétroréfléchissant, c'est-à-dire que les faisceaux lumineux sont réfléchis suivant un axe de réflexion identique à l'axe d'incidence. A ce titre, le réflecteur 42 peut être un miroir à coins de cube ou une couche de microbilles, comme décrit notamment dans le document WO2015/158999A1.

L'élément optique de collection 41 présente, de préférence, des dimensions latérales petites par rapport à la distance de cet ensemble avec la scène 2, de sorte que les premier et deuxième échos S_{ret,c(1)} et S_{ret,c(2)} passent physiquement par quasiment le même trajet optique. Ils sont donc collectés suivant quasiment le même axe optique et avec une bonne superposition spatiale, améliorant ainsi la combinaison des deux signaux optiques par interférence, ce qui permet d'améliorer l'intensité du signal hétérodyne Sₕ.

Le système imageur 1 comporte en outre un photodétecteur 50, qui est ici une photodiode (ou par exemple une paire de photodiodes balancées) dans la mesure où le système imageur 1 est de type mono-point. Il reçoit, non pas le signal de référence Sᵣ d'un oscillateur local, mais un premier écho S_{ret,c(1)} et un deuxième écho S_{ret,c(2)} du signal rétrodiffusé Sᵣₑₜ par la scène 2 et collecté par l'élément optique de collection 41, lesquels interfèrent entre eux pour former le signal hétérodyne Sₕ qui présente une fréquence de battement f_{b}.

Le système imageur 1 comporte une unité de traitement 60 adaptée à déterminer la distance z_{sc} du point éclairé de la scène 2 à partir de la fréquence de battement f_{b} du signal hétérodyne Sₕ reçu par le photodétecteur 50. La distance z_{sc} est ici la distance séparant la scène 2 du réflecteur 42.

Avant de détailler le fonctionnement du système imageur 1, notons que l'invention couvre également la configuration du système imageur 1 de type flash où plusieurs points de la scène 2 sont éclairés de manière simultanée par le même signal primaire Sₚ.

A ce titre, la fig.2B illustre un tel système imageur 1, similaire à celle de la fig.1 mais qui s'en distingue en ce qu'il ne comporte pas de dispositif optique de séparation/recombinaison, et en ce qu'il comporte un réflecteur 42 adapté à réfléchir en direction de la scène 2 une partie S_{ret,nc} du signal rétrodiffusé Sᵣₑₜ non collecté par l'élément optique de collection 41.

A titre d'exemple, la source optique 10 peut comporter des éléments optiques passifs (non représentés) situés en aval de la source laser. Ainsi, une lentille de mise en forme peut être prévue, qui permet de collimater le faisceau optique tout en en élargissant sa dimension latérale, par exemple à un diamètre de quelques millimètres. De plus, un dispositif de filtrage spatial peut être présent pour supprimer les hautes fréquences spatiales. Ainsi, le signal primaire Sₚ se propage de manière collimatée, avec un profil gaussien et un diamètre de l'ordre de quelques millimètres, par exemple 5mm. Il présente alors une puissance optique qui est sensiblement la même au niveau de la scène éclairée.

A la différence du système imageur 1 de la fig.2A, le système imageur 1 selon cette variante comporte un dispositif optique de projection 30 du signal primaire Sₚ en direction de la scène 2 de manière à l'éclairer de manière simultanée. Il comporte également un dispositif optique d'imagerie 40 adapté à transmettre la partie S_{ret,c} du signal rétrodiffusé Sᵣₑₜ et à former l'image de la scène 2 éclairée dans le plan de détection du photodétecteur 50. Ces dispositifs optiques sont similaires à ceux décrits dans le document WO2021/144357A1 et ne sont donc pas décrits en détail ici. Notons que le système imageur 1 ne comporte pas non plus l'élément optique de mise en forme 22 du signal de référence Sᵣ décrit sur la fig.1.

Enfin, le photodétecteur 50 est de type matriciel, et comporte une matrice de pixels de détection s'étendant dans un plan de réception. Il peut s'agir d'un photodétecteur de type CMOS (voire de type CCD). Le plan de réception du photodétecteur matriciel 50 est situé dans un plan conjugué de la scène par le dispositif optique d'imagerie 40 (à la profondeur de champ près dans la mesure où la scène n'est pas forcément une surface plane). Autrement dit, l'image de la scène 2 se forme dans le plan de réception du photodétecteur matriciel 50. Chaque pixel de détection est destiné à recevoir le signal hétérodyne Sₕ.

Le fonctionnement du système imageur 1 est maintenant décrit en référence aux figures 3A, 3B et 3C, où la fig.3A est une vue schématique et partielle d'un système imageur 1 similaire à celui de la fig.2A mettant en évidence les différents signaux optiques présents, et où les fig.3B et 3C illustrent l'évolution temporelle de la fréquence de différents signaux optiques, mettant en évidence la fréquence de battement f_{b}, dans le cas de l'art antérieur (fig.3B) et dans le cas de l'invention (fig.3C).

La source optique 10 émet le signal primaire Sₚ cohérent, continu et modulé en fréquence, qui est entièrement dirigé vers la scène 2. Aussi, la puissance du signal optique éclairant la scène 2 est égale à celle en sortie de la source optique 10.

La scène 2 rétrodiffuse une partie du signal primaire Sₚ qui forme alors le signal rétrodiffusé Sᵣₑₜ. Celui-ci comporte une partie S_{ret,c} qui est collectée par l'élément optique de collection 41, et une partie S_{ret,nc} qui n'est pas collectée par cet élément optique de collection 41. En effet, la scène 2 présente habituellement une composante au moins partiellement diffuse en réflexion, c'est-à-dire que la lumière est réfléchie selon une indicatrice angulaire relativement large. Aussi, la lumière rétrodiffusée par la scène 2 éclaire l'élément optique de collection 41 mais également une partie de l'espace environnant cette optique de collection. Aussi, la partie non collectée S_{ret,nc} peut être réfléchie par le réflecteur 42 en direction de la scène 2, ce qui forme en retour le signal réfléchi S_{ret,r}, dont une partie est ensuite à nouveau rétrodiffusée par la scène 2 puis collectée par l'élément optique de collection 41.

Il en résulte que l'élément optique de collection 41 collecte une partie S_{ret,c} du signal rétrodiffusé Sᵣₑₜ, qui est alors formée des faisceaux lumineux S_{ret,c(1)} ayant été directement collectés sans avoir été réfléchis par le réflecteur 42 (premier écho), et des faisceaux lumineux S_{ret,c(2)} ayant été réfléchis par le réflecteur 42 avant d'être ensuite collectés (deuxième écho).

Notons que l'on appelle partie collectée S_{ret,c} les faisceaux lumineux qui ont été ou qui vont être collectés par l'élément optique de collection 41. Les signaux S_{ret,c(1)} et S_{ret,c(2)} sont dirigés en direction du photodétecteur 50 suivant le même axe optique et de manière au moins en partie superposés l'un à l'autre, d'autant plus lorsque les dimensions latérales de l'élément optique de collection 41 est faible devant la distance entre cet élément 41 et la scène 2. Les signaux S_{ret,c(1)} et S_{ret,c(2)} interfèrent ensuite l'un avec l'autre et forment le signal hétérodyne Sₕ.

Le deuxième écho S_{ret,c(2)} présente une amplitude qui est généralement inférieure à celle du premier écho S_{ret,c(1)}, d'autant plus que le facteur de réflectance diffuse de la scène est petit, et où le réflecteur 42 ne collecte pas l'intégralité de la lumière rétrodiffusée par la scène 2 et non collectée par l'élément optique de collection 41.

En référence à la fig.3B, dans le cas d'un système imageur de l'art antérieur comme celui de la fig.1, la fréquence de battement f_{b} est issue de la différence de chemin optique entre le signal de référence Sᵣ et le signal objet rétrodiffusé et collecté S_{or,c} (lequel correspond au premier écho S_{ret,c(1)}), qui est au premier ordre égal à un aller-retour entre la scène 2 et le système imageur 1. On peut écrire f_{b}/B = τ/T. De plus, sachant que τ = 2z_{sc}/c lorsqu'on néglige la distance zᵣ de la voie de référence devant z_{sc}, on peut alors déterminer la distance z_{sc} telle que z_{sc} = f_{b}cT/2B.

En référence à la fig.3C, dans le cas d'un système imageur 1 selon un mode de réalisation de l'invention, la fréquence de battement f_{b} est issue de la différence de chemin optique entre le premier écho S_{ret,c(1)} et le deuxième écho S_{ret,c(2)}, lequel est égal au premier ordre, ici aussi, à un aller-retour entre la scène 2 et le système imageur 1. On peut donc écrire f_{b}/B = τ/T avec τ = 2z_{sc}/c, et donc déterminer la distance z_{sc} telle que z_{sc} = f_{b}cT/2B.

L'unité de traitement 60 détermine ensuite la fréquence de battement f_{b} du signal hétérodyne Sₕ détecté, puis en déduit la distance z_{sc} de la scène 2. La fréquence de battement f_{b(2)} peut être déterminée, de manière connue, dans le domaine temporel par comptage du nombre d'oscillations du signal hétérodyne sur la période T, ou dans le domaine fréquentiel par transformée de Fourier rapide.

Aussi, le système imageur 1 selon l'invention présente un encombrement réduit dans la mesure où, grâce à la présence du réflecteur 42, il ne comporte pas de dispositif optique de séparation/recombinaison présent dans les systèmes imageurs de l'art antérieur. Aussi, il ne comporte donc pas d'élément optique séparateur assurant la division du signal primaire Sₚ en le signal de référence Sᵣ et le signal objet Sₒ, ni d'élément optique recombineur assurant la recombinaison du signal de référence Sᵣ avec le signal objet rétrodiffusé Sₒᵣ. Dans le cas d'un système imageur de type flash (voire aussi de type mono-point), il ne comporte pas non plus l'élément optique de mise en forme du signal de référence Sᵣ. On écarte ainsi les pertes photométriques associées à ces éléments optiques.

Cet avantage est obtenu en collectant, en plus du premier écho S_{ret,c(1)}, le deuxième écho S_{ret,c(2)} du signal rétrodiffusé Sᵣₑₜ, qui a été réfléchi par le réflecteur 42 puis rétrodiffusé à nouveau par la scène 2. Par ailleurs, la fréquence de battement f_{b} reste sensiblement égale à celle mesurée dans l'art antérieur, de sorte que le système imageur 1 selon l'invention utilise une unité de traitement 60 qui peut rester inchangée par rapport à celle de l'art antérieur.

Notons que le système imageur 1 selon l'invention ne comporte donc pas de signal de référence Sᵣ d'un oscillateur local, dans la mesure où les deux signaux S_{ret,c(1)} et S_{ret,c(2)} sont rétrodiffusés par la scène 2, et que les chemins optiques de ces signaux varient lorsque la distance z_{sc} varie, ce qui n'est pas le cas dans un système imageur selon l'art antérieur où le chemin optique du signal de référence Sᵣ ne passe pas par la scène et reste indépendant de la distance z_{sc}.

On décrit maintenant, en référence aux figures 4A à 4C, un exemple concret de détermination de la fréquence de battement f_{b} du signal hétérodyne Sₕ, ici par FFT, dans le cas d'un système imageur de l'art antérieur de type mono-point (fig.4A), et dans le cas d'un système imageur selon l'invention, ici également de type mono-point (fig.4B). La fig.4C représente la densité spectrale de puissance mettant en évidence la fréquence de battement f_{b} dans ces deux cas.

Dans cet exemple, le signal primaire Sₚ présente une longueur d'onde λ de 633nm, un *chirp* B égal à 12GHz pour une période T égale à 1.6ms, et la scène est située à une distance z_{sc} de 50cm. La scène 2 est formée d'une plaque de silicium dépolie, présentant un comportement semi-diffusant en réflexion.

La fig.4A représente le système imageur selon l'art antérieur. Il comporte donc un dispositif optique de séparation/recombinaison 20 formé d'un élément optique séparateur 21 et d'un élément optique recombineur 23. Le signal primaire Sₚ est donc divisé par l'élément optique séparateur 21 en un signal de référence Sᵣ et en un signal objet Sₒ. Puis le signal objet rétrodiffusé S_{or,c} est transmis et superposé spatialement au signal de référence Sᵣ par l'élément optique recombineur 23, et collecté par l'élément optique de collection 41. Dans cet exemple, l'élément optique de collection 41 est situé entre l'élément optique recombineur 23 et le photodétecteur. La fig.4B représente le système imageur selon l'invention, ici similaire à celui décrit en référence à la fig.2A. Il n'est donc pas décrit à nouveau.

En référence à la fig.4C, la courbe C1 en trait continu représente la densité spectrale de puissance associée au système imageur de l'art antérieur (fig.4A). La fréquence de battement f_{b} mesurée est ici égale à 25kHz, en conformité avec la relation théorique f_{b} = 2Bz_{sc}/cT.

Par ailleurs, la courbe C2 en traits pointillés courts représente la densité spectrale de puissance associée au système imageur selon l'invention (fig.4B). La fréquence de battement f_{b} mesurée est ici égale à 26kHz, ce qui également conforme à la valeur théorique = 2Bz_{sc}/cT. Comme attendu, l'amplitude de ce signal est inférieure à celle obtenue avec le système imageur de l'art antérieur.

Enfin, la courbe C2' en traits pointillés longs représente la densité spectrale de puissance associée au système imageur selon l'invention (fig.4B) mais pour une distance z_{sc} = 25cm. La fréquence de battement f_{b} mesurée est ici égale à 13kHz, ce qui confirme que le signal à 26GHz n'est pas un artefact expérimental.

Les figures 5A à 5D sont des vues schématiques du réflecteur 42 selon différentes variantes de réalisation.

Le réflecteur 42 peut être situé au niveau de l'élément optique de collection 41, par exemple de manière coplanaire à celui-ci, et présenter une forme d'anneau (couronne) entourant continûment ce dernier (cf. fig.5A). Il peut être formé de segments annulaires entourant partiellement l'élément optique de collection 41. En variante, il peut présenter une forme quelconque, ici carrée, accolé ou non à l'élément optique de collection 41 (fig.5B).

Le réflecteur 42 peut ne pas être situé dans le plan de l'élément optique de collection 41, et peut être situé en amont ou en aval de ce dernier. Par exemple, il peut être situé au niveau du photodétecteur, i.e. dans le plan ou à proximité du plan de détection, que le photodétecteur 50 soit une photodiode ou de type matriciel. A ce titre, la fig.5C illustre la situation où le photodétecteur est matriciel (système imageur 1 de type flash) et comporte une matrice de pixels de détection 51 avec un facteur de remplissage inférieur à l'unité, le réflecteur 42 peut être situé dans les zones non photosensibles de la matrice de pixels de détection 51. Dans ce cas de figure et lorsque le réflecteur 42 est rétroréfléchissant, les coins de cube présentent de préférence une dimension latérale très supérieure à la longueur d'onde, par exemple supérieure à 10 fois la longueur d'onde du signal primaire, de sorte que les coins de cube ne diffractent pas.

Par ailleurs, le réflecteur 42 peut être formé d'une surface continûment réfléchissante ou rétroréfléchissante, ou être formé de surfaces réfléchissantes ou rétroréfléchissantes 42.2 non jointives et séparées les unes des autres par une surface transparente ou réfléchissante 42.1 à la longueur d'onde des signaux optiques d'intérêt, comme l'illustre la fig.5D. Dans le cas où la surface 42.1 est transparente, ce mode de réalisation est particulièrement intéressant lorsque le réflecteur 42 est situé en amont de l'élément optique de collection 41 et est traversé par l'axe optique de collection (cf. fig.8A et 8B). A ce titre, le réflecteur 42 peut être formé d'une surface centrale traversée par l'axe optique de collection, comportant les surfaces réfléchissantes ou rétroréfléchissantes 42.2 séparées les unes des autres et entourées par une surface transparente 42.1, et d'une surface périphérique qui entoure la surface centrale, dans laquelle les surfaces réfléchissantes ou rétroréfléchissantes 42.2 sont accolées les unes aux autres.

La figure 6A est une vue schématique et partielle d'un système imageur 1 selon un mode de réalisation de type mono-point, dans lequel le réflecteur 42 est rétroréfléchissant. La figure 6B illustre un détail de la fig.6A pour mettre en évidence une condition sur la distance maximale rₘₐₓ de la bordure latérale du réflecteur 42 vis-à-vis de l'axe optique de collection.

Selon un mode de réalisation, le réflecteur 42 est rétroréfléchissant, dans le sens où les faisceaux lumineux incidents sont réfléchis avec un axe de réflexion identique à l'axe d'incidence. Ainsi, le faisceau lumineux rétrodiffusé par un point de la scène 2 et réfléchi par le réflecteur 42 rétroréfléchissant est renvoyé sur ce même point de la scène 2 ou à proximité immédiate. Aussi, un tel réflecteur 42 permet de ne pas mélanger, parmi les faisceaux lumineux du signal collecté S_{ret,c}, les faisceaux lumineux en provenance de plusieurs points différents de la scène 2, et donc de ne pas dégrader la résolution latérale du système imageur 1. Dans le cas d'un système imageur 1 de type mono-point, cela permet que la détermination de la distance z_{sc} ne soit pas parasitée par des faisceaux lumineux provenant d'objets situés à d'autres distances. Et dans le cas d'un système imageur 1 de type flash, on évite ainsi de dégrader la qualité ou la résolution spatiale de la cartographie de distance déterminée.

Le réflecteur 42 est agencé vis-à-vis de l'axe optique de l'élément optique de collection 41, de sorte qu'il présente une bordure latérale externe située à une distance maximale rₘₐₓ de cet axe optique. De préférence, cette distance maximale rₘₐₓ est inférieure à √(cz_{sc}/B), ceci pour ne pas dégrader la résolution en distance Δz_{sc} du système imageur 1. En effet, comme l'illustre la figure 6B, un faisceau lumineux de la partie non collectée S_{ret,nc} qui serait rétroréfléchi au niveau de la bordure du réflecteur 42, puis rétrodiffusé suivant l'axe optique de l'élément optique de collection 41, parcourrait alors une distance z_{sc} + √(z_{sc}²+rₘₐₓ²), et non pas 2z_{sc}, ce qui induirait une erreur de l'ordre de rₘₐₓ²/2z_{sc} dans l'hypothèse où rₘₐₓ « z_{sc}. Aussi, cette erreur rₘₐₓ²/2z_{sc} devrait avantageusement être inférieure à la résolution en distance Δz_{sc} égale à c/2B, ce qui conduit à la condition rₘₐₓ < √(cz_{sc}/B). Notons que cette condition n'est pas très restrictive, dans la mesure où on obtient rₘₐₓ < 15cm pour z_{sc}=50cm et B=7GHz.

Le réflecteur 42 présente une surface adaptée pour maximiser le nombre de photons du signal S_{ret,nc} interceptés puis réfléchis, ce qui augmente en conséquence l'amplitude du deuxième écho S_{ret,c(2)} et donc la portée en distance du système imageur 1, sans pour autant nuire à la compacité du module de réception du système imageur 1. Quoi qu'il en soit, il est avantageux que le réflecteur 42 présente des dimensions qui respectent la condition mentionnée plus haut sur la distance maximale rₘₐₓ de la bordure latérale.

La figure 7A est une vue schématique et partielle d'un système imageur 1 selon un mode de réalisation, dans lequel le réflecteur 42 est non rétroréfléchissant, c'est-à-dire seulement réfléchissant. La figure 7B illustre un détail de la fig.7A pour mettre en évidence une condition sur la distance maximale rₘₐₓ de la bordure latérale du réflecteur 42 vis-à-vis de l'axe optique de collection.

Un faisceau lumineux incident sur le réflecteur 42 n'est donc pas réfléchi suivant un axe de réflexion identique à l'axe d'incidence, mais suit la loi de réflexion de Snell-Descartes. Il est donc réfléchi en direction d'un point différent que celui d'où provient le faisceau lumineux de la partie S_{ret,nc} du signal rétrodiffusé Sᵣₑₜ. Pour un faisceau lumineux qui se réfléchit sur le réflecteur 42 à la distance rₘₐₓ, on remarque que la distance entre ces deux points de la scène est de l'ordre de 2rₘₐₓ (pour une scène sensiblement perpendiculaire à l'axe optique). Il en résulte que la condition précédente sur la distance rₘₐₓ de la bordure latérale externe du réflecteur 42 est modifiée et devient : rₘₐₓ < √(cz_{sc}/3B). Cette condition reste encore peu restrictive puisqu'on obtient rₘₐₓ < 8.5cm dans le cas où z_{sc} = 50cm et B=7GHz. Quoi qu'il en soit, il est préférable de réserver l'utilisation d'un réflecteur 42 non rétroréfléchissant à un système imageur 1 de type mono-point. Par ailleurs, on veillera à ce que la séparation angulaire entre les deux points éclairés de la scène 2 reste inférieure à la résolution angulaire iFOV (pour *individual Field Of View,* en anglais) de l'élément optique de collection 41, avec la condition 2atan(rₘₐₓ/z_{sc})<iFOV, de manière à ne pas dégrader la résolution latérale. Notons que le champ de vue FOV (*Field of View,* en anglais) de l'élément optique de collection 41 est l'angle dans lequel le photodétecteur 50 est sensible à la partie S_{ret,c} du signal rétrodiffusé Sᵣₑₜ au travers de l'élément optique de collection 41.

Selon un mode de réalisation, le système imageur 1 peut présenter une configuration dite mono-statique, dans le sens où l'axe optique d'illumination de la scène 2 et l'axe optique de collection sont colinéaires. A ce titre, la figure 8A est une vue schématique et partielle d'un tel système imageur 1, ici de type mono-point, mais cette configuration peut également être mise en œuvre pour un système imageur 1 de type flash. Par ailleurs, le réflecteur 42 est ici rétroréfléchissant et est situé en amont de l'élément optique de collection 41, dans le sens où l'axe optique de collection traverse le réflecteur 42. Aussi, ce dernier est au moins partiellement réfléchissant ou rétroréfléchissant, et est formé de surfaces réfléchissantes ou rétroréfléchissantes non jointives séparées les unes des autres par une surface transparente (cf. l'exemple de la fig.5D).

Le système imageur 1 comporte ici une lame semi-réfléchissante 43 (ou un cube séparateur) placée sur le chemin optique du signal primaire Sₚ, et l'élément optique de collection 41 (et le réflecteur 42) est situé entre la scène 2 et la lame 43. Il est également possible d'utiliser, à la place de la lame semi-réfléchissante 43, un cube séparateur de polarisation associé à une lame quart d'onde, qui permet de diminuer les pertes optiques. Cet ensemble optique forme un isolateur optique permettant d'éviter que de la lumière ne soit rétrodiffusée sur la source laser (et donc éviter toute surchauffe de la source laser).

Ainsi, le signal primaire Sₚ est transmis en direction de la scène 2 par la lame semi-réfléchissante 43. Une partie S_{ret,c(1)} (premier écho) du signal rétrodiffusé Sᵣₑₜ est collectée par l'élément optique de collection 41 puis réfléchie par la lame semi-réfléchissante 43 en direction du photodétecteur 50. Une partie S_{ret,nc} du signal rétrodiffusé Sᵣₑₜ n'est pas collectée par l'élément optique de collection 41, mais est rétroréfléchie par le réflecteur 42, puis est collectée par l'élément optique de collection 41 (deuxième écho), puis est réfléchie par la lame semi-réfléchissante 43 en direction du photodétecteur 50. Les deux échos S_{ret,c(1)} et S_{ret,c(2)} interfèrent pour former le signal hétérodyne Sₕ détecté par le photodétecteur 50.

Le système imageur 1 présente ici l'avantage de faciliter la détection et la détermination de la distance z_{sc} d'objets ayant une forte composante spéculaire, c'est-à-dire que la lumière est rétrodiffusée par l'objet en question de la scène dans un cône de rétrodiffusion (distribution angulaire de l'intensité lumineuse rétrodiffusée) centré sur une direction principale, cette direction pouvant être proche de la direction de réflexion spéculaire. En effet, dans le cas d'un système imageur 1 de type bi-statique présenté précédemment (fig.2A-2B et fig.6A-7A), le deuxième écho S_{ret,c(2)} pourrait être rétrodiffusé principalement en direction de la source optique 10, et peu en direction de l'élément optique de collection 41, réduisant ainsi l'intensité du signal S_{ret,c(2)} collecté, et donc la capacité du système imageur 1 à détecter ce type d'objet de la scène 2. Ce n'est pas le cas pour un système imageur 1 de type mono-statique, dans la mesure où le deuxième écho S_{ret,c(2)} est principalement renvoyé vers l'élément optique de collection 41 et le réflecteur 42 (l'indicatrice angulaire est étroite). Par ailleurs, cette configuration mono-statique pour un système imageur 1 présente l'avantage de réduire voire d'écarter les phénomènes d'ombrage dans la cartographie de distance déterminée, par le fait même que ces deux axes optiques sont confondus.

La figure 8B est une vue schématique et partielle d'un système imageur 1 selon un autre mode de réalisation, de type mono-point et de configuration bi-statique, similaire à celui de la fig.6A, où le réflecteur 42 est également situé en amont de l'élément optique de collection 41.

Des modes de réalisation particuliers viennent d'être décrits. Différentes variantes et modifications apparaîtront à l'homme du métier. Ainsi, le système imageur 1 peut présenter une configuration en espace libre comme une configuration en optique guidée, comme décrit dans le document WO2021/144357A1 mentionné précédemment.

## Revendications

1. Système imageur (1) LIDAR de type FMCW, adapté à déterminer une distance z_{sc} le séparant d'une scène (2), comportant :
∘ une source optique (10), adaptée à émettre un signal primaire Sₚ cohérent, continu et modulé en fréquence, pour éclairer la scène (2) ;
∘ un élément optique de collection (41), adapté à collecter une partie appelée signal collecté S_{ret,c} d'un signal rétrodiffusé Sᵣₑₜ par la scène (2) issu du signal primaire Sₚ ;
∘ un photodétecteur (50), destiné à recevoir un signal hétérodyne Sₕ associé au signal collecté S_{ret,c} ;
∘ une unité de traitement (60), adaptée à déterminer la distance z_{sc} de la scène à partir d'une fréquence de battement du signal hétérodyne Sₕ ;
∘ **caractérisé en ce qu'**il est adapté à diriger entièrement le signal primaire Sₚ jusqu'à la scène (2) ;
∘ et **en ce qu'**il comporte un réflecteur (42) adapté à réfléchir en direction de la scène (2) une partie S_{pr,nc}, appelée signal non collecté S_{ret,nc}, du signal rétrodiffusé Sᵣₑₜ et non collectée par l'élément optique de collection (41),
• la partie collectée S_{pr,c} du signal rétrodiffusé Sₚᵣ étant alors formée : de premiers faisceaux lumineux S_{ret,c(1)} n'ayant pas été réfléchis par le réflecteur (42) ; et de deuxièmes faisceaux lumineux S_{ret,c(2)} ayant été réfléchis par le réflecteur (42) puis par la scène (2) ;
• le signal hétérodyne Sₕ étant alors formé par l'interférence entre les premiers faisceaux lumineux S_{ret,c(1)} et les deuxièmes faisceaux lumineux S_{ret,c(2)}.

2. Système imageur (1) selon la revendication 1, dans lequel le réflecteur (42) est rétroréfléchissant, pour réfléchir en direction de la scène (2) des faisceaux lumineux incidents suivant un axe de réflexion identique à leur axe d'incidence.

3. Système imageur (1) selon la revendication 1 ou 2, dans lequel le réflecteur (42) présente une bordure latérale située à une distance maximale rₘₐₓ d'un axe optique de l'élément optique de collection (41), et est dimensionné de sorte que la distance maximale rₘₐₓ est inférieure à √(cz_{sc}/B) lorsque le réflecteur (42) est rétroréfléchissant, où c est la vitesse de la lumière dans le vide, et B est une variation de la fréquence du signal primaire Sₚ sur une période T de la modulation, et de sorte que la distance maximale rₘₐₓ est inférieure à √(cz_{sc}/3B) lorsque le réflecteur (42) est non rétroréfléchissant.

4. Système imageur (1) selon l'une quelconque des revendications 1 à 3, dans lequel le réflecteur (42) est situé dans le plan de l'élément optique de collection (41).

5. Système imageur (1) selon l'une quelconque des revendications 1 à 3, dans lequel le réflecteur (42) est situé en aval de l'élément optique de collection (41) au niveau du photodétecteur (50).

6. Système imageur (1) selon l'une quelconque des revendications 1 à 3, dans lequel le réflecteur (42) est situé en amont de l'élément optique de collection (41) avec un axe optique de collection qui le traverse, le réflecteur (42) étant alors formé de surfaces réfléchissantes ou rétroréfléchissantes (42.2) séparées les unes des autres et entourées par une surface transparente (42.1) à la longueur d'onde du signal primaire Sₚ.

7. Système imageur (1) selon la revendication 6, dans lequel le réflecteur (42) comporte une surface centrale traversée par l'axe optique de collection, dans laquelle il est formé de surfaces réfléchissantes ou rétroréfléchissantes (42.2) séparées les unes des autres et entourées par une surface transparente (42.1), et une surface périphérique qui entoure la surface centrale, dans laquelle les surfaces réfléchissantes ou rétroréfléchissantes (42.2) sont accolées les unes aux autres.

8. Système imageur (1) selon l'une quelconque des revendications 1 à 7, adapté à n'éclairer qu'un point de la scène (2), ou adapté à éclairer simultanément une pluralité de points de la scène (2) et comportant alors un dispositif optique de projection (30) du signal primaire Sₚ sur la scène (2) pour éclairer simultanément la pluralité de points de la scène (2) et un dispositif optique d'imagerie (40) adapté à former une image de la scène éclairée dans le plan du photodétecteur (50).

9. Système imageur (1) selon l'une quelconque des revendications 1 à 8, présentant une configuration dite mono-statique où un axe optique d'illumination de la scène par le signal primaire Sₚ est identique à un axe optique de collection de l'élément optique de collection (41), et comportant une lame semi-réfléchissante (43) ou un cube séparateur transmettant le signal primaire Sₚ vers la scène et réfléchissant le signal rétrodiffusé Sᵣₑₜ vers le photodétecteur (50).

10. Système imageur (1) selon l'une quelconque des revendications 1 à 8, présentant une configuration dite bi-statique où un axe optique d'illumination de la scène par le signal primaire Sₚ est différent d'un axe optique de collection de l'élément optique de collection (41).

## Patentansprüche

1. LIDAR-Bildgebungssystem (1) vom FMCW-Typ, das geeignet ist, einen Abstand z_{sc} zu bestimmen, der es von einer Szene (2) trennt, umfassend:
∘ eine optische Quelle (10), die geeignet ist, ein kohärentes, kontinuierliches und frequenzmoduliertes Primärsignal Sₚ zu senden, um die Szene (2) zu beleuchten;
∘ ein optisches Sammelelement (41), das geeignet ist, einen als gesammeltes Signal S_{ret,c} bezeichneten Teil eines von der Szene (2) zurückgestreuten Signals Sᵣₑₜ, das aus dem Primärsignal Sₚ stammt, zu sammeln;
∘ einen Fotodetektor (50), der dazu bestimmt ist, ein Überlagerungssignal Sₙ in Verbindung mit dem gesammelten Signal S_{ret.c} zu empfangen;
∘ eine Verarbeitungseinheit (60), die geeignet ist, den Abstand z_{sc} der Szene ausgehend von einer Schlagfrequenz des Überlagerungssignals Sₕ zu bestimmen;
∘ **dadurch gekennzeichnet, dass** es geeignet ist, das Primärsignal Sₚ vollständig bis zur Szene (2) zu leiten;
∘ und dass es einen Reflektor (42) umfasst, der geeignet ist, einen als nicht gesammeltes Signal S_{ret,nc} bezeichneten Teil S_{pr,nc} des zurückgestreuten Signals Sᵣₑₜ, das nicht vom optischen Sammelelement (41) gesammelt wurde, in Richtung der Szene (2) zu reflektieren,
• wobei der gesammelte Teil S_{pr,c} des zurückgestreuten Signals Sₚᵣ dann gebildet wird aus: ersten Lichtstrahlen S_{ret,c(1)}, die nicht vom Reflektor (42) reflektiert wurden; und zweiten Lichtstrahlen S_{ret,c(2)}, die vom Reflektor (42) und dann von der Szene (2) reflektiert wurden;
• wobei das Überlagerungssignal Sₕ dann durch die Interferenz zwischen den ersten Lichtstrahlen S_{ret,c(1)} und den zweiten Lichtstrahlen S_{ret,c(2)} gebildet wird.

2. Bildgebungssystem (1) nach Anspruch 1, wobei der Reflektor (42) retroreflektierend ist, um die einfallenden Lichtstrahlen entlang einer Reflexionsachse, die identisch mit ihrer Einfallsachse ist, in Richtung der Szene (2) zu reflektieren.

3. Bildgebungssystem (1) nach Anspruch 1 oder 2, wobei der Reflektor (42) einen seitlichen Rand aufweist, der sich in einem maximalen Abstand rₘₐₓ von einer optischen Achse des optischen Sammelelements (41) befindet, und so dimensioniert ist, dass der maximale Abstand rₘₐₓ kleiner ist als √(cz_{sc}/B), wenn der Reflektor (42) retroreflektierend ist, wobei c die Lichtgeschwindigkeit im Vakuum ist und B eine Änderung der Frequenz des Primärsignals Sₚ über einen Zeitraum T der Modulation ist, und so, dass der maximale Abstand rₘₐₓ kleiner ist als √(cz_{sc}/3B), wenn der Reflektor (42) nicht retroreflektierend ist.

4. Bildgebungssystem (1) nach einem der Ansprüche 1 bis 3, wobei sich der Reflektor (42) in der Ebene des optischen Sammelelements (41) befindet.

5. Bildgebungssystem (1) nach einem der Ansprüche 1 bis 3, wobei sich der Reflektor (42) nach dem optischen Sammelelement (41) an dem Fotodetektor (50) befindet.

6. Bildgebungssystem (1) nach einem der Ansprüche 1 bis 3, wobei sich der Reflektor (42) vor dem optischen Sammelelement (41) mit einer ihn durchquerenden optischen Sammelachse befindet, wobei der Reflektor (42) dann aus reflektierenden oder retroreflektierenden Oberflächen (42.2) gebildet ist, die voneinander getrennt und von einer Oberfläche (42.1) umgeben sind, die bei der Wellenlänge des Primärsignals Sₚ transparent ist.

7. Bildgebungssystem (1) nach Anspruch 6, wobei der Reflektor (42) eine zentrale Oberfläche, die von der optischen Sammelachse durchquert wird, wobei er aus reflektierenden oder retroreflektierenden Oberflächen (42.2) gebildet ist, die voneinander getrennt und von einer transparenten Oberfläche (42.1) umgeben sind, und eine periphere Oberfläche umfasst, die die zentrale Oberfläche umgibt, wobei die reflektierenden oder retroreflektierenden Oberflächen (42.2) aneinander anliegen.

8. Bildgebungssystem (1) nach einem der Ansprüche 1 bis 7, das geeignet ist, nur einen Punkt der Szene (2) zu beleuchten, oder das geeignet ist, eine Vielzahl von Punkten der Szene (2) gleichzeitig zu beleuchten, und dann eine optische Vorrichtung zur Projektion (30) des Primärsignals Sₚ auf die Szene (2), um die Vielzahl von Punkten der Szene (2) gleichzeitig zu beleuchten, und eine optische Bildgebungsvorrichtung (40) umfasst, die geeignet ist, ein Bild der beleuchteten Szene in der Ebene des Fotodetektors (50) zu bilden.

9. Bildgebungssystem (1) nach einem der Ansprüche 1 bis 8, das eine sogenannte monostatische Konfiguration aufweist, bei der eine optische Achse zur Beleuchtung der Szene durch das Primärsignal Sₚ identisch mit einer optischen Sammelachse des optischen Sammelelements (41) ist, und das eine halbreflektierende Platte (43) oder einen Trennwürfel umfasst, die bzw. der das Primärsignal Sₚ an die Szene überträgt und das zurückgestreute Signal Sᵣₑₜ an den Fotodetektor (50) reflektiert.

10. Bildgebungssystem (1) nach einem der Ansprüche 1 bis 8, das eine sogenannte bistatische Konfiguration aufweist, bei der eine optische Achse zur Beleuchtung der Szene durch das Primärsignal Sₚ sich von einer optischen Sammelachse des optischen Sammelelements (41) unterscheidet.

## Claims

1. An FMCW type LIDAR imaging system (1), adapted to determine a distance z_{sc} separating it from a scene (2), comprising:
∘ an optical source (10), adapted to emit a coherent, continuous and frequency-modulated primary signal Sₚ, to illuminate the scene (2);
∘ an optical collection element (41), adapted to collect a portion referred to as collected signal S_{ret,c} of a backscattered signal Sᵣₑₜ by the scene (2) from the primary signal Sₚ;
∘ a photodetector (50), intended to receive a heterodyne signal Sₕ associated with the collected signal S_{ret.c};
∘ a processing unit (60), adapted to determine the distance z_{sc} of the scene based on a beat frequency of the heterodyne signal Sₕ;
∘ **characterised in that** it is adapted to direct the primary signal Sₚ entirely to the scene (2);
∘ and **in that** it comprises a reflector (42) adapted to reflect towards the scene (2) a portion S_{pr,nc}, referred to as uncollected signal S_{ret,nc}, of the backscattered signal Sᵣₑₜ and not collected by the optical collection element (41),
• the collected portion S _{pr,c} of the backscattered signal Sₚᵣ then being formed of: first light beams S_{ret,c(1)} that have not been reflected by the reflector (42); and second light beams S_{ret,c(2)} that have been reflected by the reflector (42) then by the scene (2);
• the heterodyne signal Sₕ then being formed by the interference between the first light beams S_{ret,c(1)} and the second light beams S_{ret,c(2)}.

2. The imaging system (1) according to claim 1, wherein the reflector (42) is retroreflective, to reflect incident light beams in the direction of the scene (2) along an axis of reflection identical to their axis of incidence.

3. The imaging system (1) according to claim 1 or 2, wherein the reflector (42) has a lateral boundary located at a maximum distance rₘₐₓ from an optical axis of the optical collection element (41), and is dimensioned so that the maximum distance rₘₐₓ is less than √(cz_{sc}/B) when the reflector (42) is retroreflective, where c is the speed of light in vacuum, and B is a variation of the frequency of the primary signal Sₚ over a modulation period T, and so that the maximum distance rₘₐₓ is less than √(cz_{sc}/3B) when the reflector (42) is non-retroreflective.

4. The imaging system (1) according to any one of claims 1 to 3, wherein the reflector (42) is located in the plane of the optical collection element (41).

5. The imaging system (1) according to any one of claims 1 to 3, wherein the reflector (42) is located downstream of the optical collection element (41) at the photodetector (50).

6. The imaging system (1) according to any one of claims 1 to 3, wherein the reflector (42) is located upstream of the optical collection element (41) with an optical axis of collection passing therethrough, the reflector (42) then being formed of reflective or retroreflective surfaces (42.2) separated from one another and surrounded by a surface (42.1) that is transparent at the wavelength of the primary signal Sₚ.

7. The imaging system (1) according to claim 6, wherein the reflector (42) comprises a central surface through which the optical axis of collection passes, wherein it is formed of reflective or retroreflective surfaces (42.2) separated from one another and surrounded by a transparent surface (42.1), and a peripheral surface which surrounds the central surface, wherein the reflective or retroreflective surfaces (42.2) are joined to one another.

8. The imaging system (1) according to any one of claims 1 to 7, adapted to illuminate only one point of the scene (2), or adapted to simultaneously illuminate a plurality of points of the scene (2) and then comprising an optical device (30) for projecting the primary signal Sₚ onto the scene (2) to simultaneously illuminate the plurality of points of the scene (2) and an optical imaging device (40) adapted to form an image of the illuminated scene in the plane of the photodetector (50).

9. The imaging system (1) according to any one of claims 1 to 8, having a configuration referred to as monostatic where an optical axis of illumination of the scene by the primary signal Sp is identical to an optical axis of collection of the optical collection element (41), and comprising a semi-reflective plate (43) or a splitting cube transmitting the primary signal Sp towards the scene and reflecting the backscattered signal Sᵣₑₜ towards the photodetector (50).

10. The imaging system (1) according to any one of claims 1 to 8, having a configuration referred to as bistatic where an optical axis of illumination of the scene by the primary signal Sₚ is different from an optical axis of collection of the optical collection element (41).
